# EUROPEAN PATENT SPECIFICATION

(11) **EP 2 053 939 B1**
(45) Date of publication and mention of the grant of the patent: **22.09.2010**
(21) Application number: 07825983.5
(22) Date of filing: 03.08.2007
(51) Int. Cl.: A46B 5/00

(54) **TOOTHBRUSH WITH A HEAD ABLE TO SWING UNDER TORSION**
ZAHNBÜRSTE MIT EINEM UNTER DREHUNG SCHWINGBAREN KOPF
BROSSE À DENTS DOTÉE D'UNE TÊTE CAPABLE DE CHANGER DE DIRECTION EN TORSION

(30) Priority: 10.08.2006 IT MI20061617
(43) Date of publication of application: 06.05.2009
(73) Proprietor: PONZINI S.p.A., 20020 Lazzate (Milano) (IT)
(72) Inventor: PONZINI, Eligio, I-20123 Milano (IT)
(74) Representative: Faggioni, Carlo Maria
(86) International application number: PCT/IB2007/053066
(87) International publication number: WO 2008/017996

(56) References cited:
- EP-A- 0 613 636
- WO-A-92/15224
- DE-C1- 19 519 674
- US-A- 4 488 328
- US-B1- 6 292 973

## Description

### Field of the Invention

The present invention concerns a toothbrush, in particular a toothbrush with a able to swing head.

### Background Art

As known, in the last decade the toothbrush market has seen the development of a huge variety of toothbrushes of the most diverse and unusual shapes, both with the intent of making this object more functional, and of making it more appealing and innovative to the consumers' eyes, who have become ever more demanding when it comes to technology and appearance.

Many of the improvements obtained in this sector were made possible also by resorting to high-tech moulding stations of plastic materials and tufting stations, which nowadays allows to develop highly complex toothbrushes.

Among the components which have captured most the designers' attention, the tufted head portion of the toothbrush has been the subject of a number of improvements, which have increased the cleaning effectiveness and handling thereof.

In particular, various solutions have been offered wherein the head is capable of swinging in a more or less pronounced manner with respect to an axis transversal to the toothbrush handle. Some examples are represented by US 4 488 328, US 5 054 154, US 4 829 621, EP 371 293, WO 00/70997, as well as EP 648 448 in the name of the same Applicant.

Bending of the head, especially in the plane parallel to the tufts, has always been considered the most advantageous flexion to second the arched structure of the dental arc and hence to aid effective teeth cleaning and an even distribution of the pressure imparted by the hand on the handle.

Recently it has been found that also a crosswise swinging of the head may appeal to the user.

Among the many known toothbrushes, there are hence some allowing a lateral bend of the head (i.e. in a perpendicular direction to the tufts) and even a moderate freedom of rotation about the main longitudinal axis of the toothbrush. Among these, for example, EP 604 425, EP 613 636.

However, so far the problem of obtaining a toothbrush with a flexible head under torsion, i.e. swinging about the main longitudinal axis, has not been addressed with systematicity and rigour, although some clinical trials and market surveys have highlighted that there would be the need for such a product.

The object of the present invention is hence that of providing a flexible-head toothbrush, wherein the head may elastically swing with respect to an axis parallel to the main longitudinal axis and wherein such rotation may be caused in the desired way, without significantly affecting the bending of the head along the other transversal axes of the toothbrush and without weakening the structural resistance of the same.

### Summary of the Invention

Such object is achieved through a toothbrush as described in its essential features in the accompanying main claim.

In particular, according to a main aspect of the invention, a toothbrush is provided of the type comprising a body of plastic material made of at least a first skeleton component and at least a second filler component of elastomeric material, wherein a handle portion and head portion are defined, the latter being provided with cleaning tufts, among which there is provided a neck portion comprising two elongated side arms between which there is arranged a central core element, which belong to the first skeleton component and are substantially aligned to a longitudinal axis of the toothbrush, the second filler component being arranged at least in the gaps between the two side arms and the central core, said core extending integrally from the skeleton component of the head and two arms projecting integrally from the skeleton portion of the handle or, complementary, the core element projecting integrally from the handle and the two side arms being integral with the skeleton component of the head, three flimsy connection bridges being also provided, made of the same plastic material as the skeleton, which connect the end of the core with the surrounding skeleton component and the ends of the arms with the core, said bridges joining the part of the core where a torsion axis is located.

Other inventive aspects of the invention are described in the dependent claims.

### Brief Description of the Drawings

Further features and advantages of the toothbrush according to the invention will in any case be more evident from the following detailed description of a preferred embodiment of the same, given by way of example and illustrated in the accompanying drawings, wherein:
fig. 1 is an elevation side view of a toothbrush
fig. 2 is a top plan view, or a ventral-side view, of the toothbrush of fig. 1;
fig. 3 is a cross-section view taken along the line III-III of fig. 1;
fig. 4 is a cross-section view taken along the line IV-IV of fig. 1;
fig. 5 is a partial pictorial view of the sole end portion of the toothbrush according to the invention;
fig. 6 is a partial pictorial view, in a sectioned perspective, of the end portion of a toothbrush;
figs. 7 and 8 are partial top plan (or ventral side) and bottom plan (or back side) pictorial views, respectively, of the toothbrush of the invention still lacking the elastomeric component; and
fig. 9 is a perspective, partial pictorial view of the same toothbrush component illustrated in figs. 7 and 8.

### Detailed Description of a Preferred Embodiment

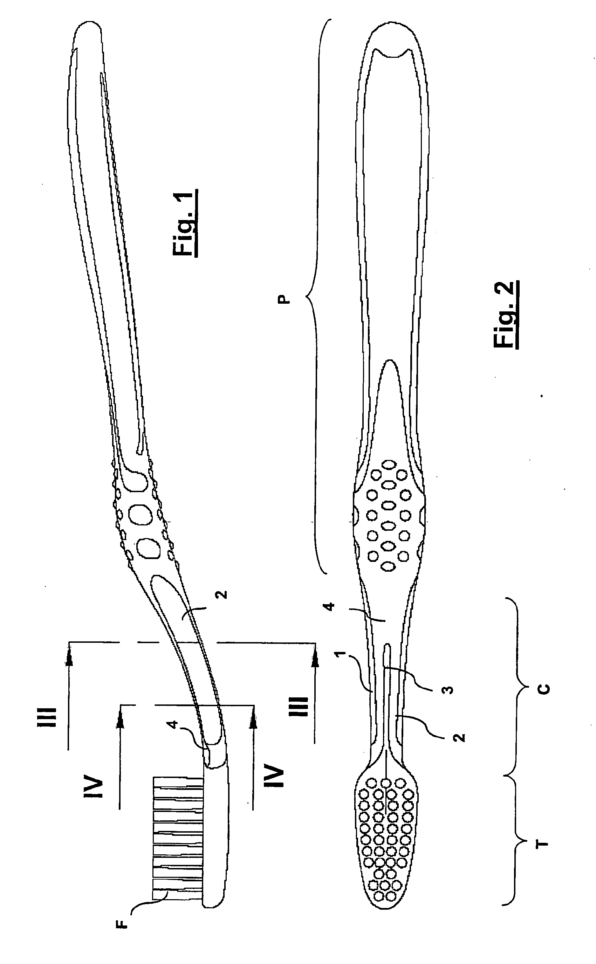

As clearly illustrated in fig. 2, a toothbrush consists in a manner known per se of a handle portion P, of a neck portion C and of a head portion T, wherein a plurality of cleaning tufts F are inserted.

The toothbrush is made of plastic material and through co-moulding techniques which allow to join firmly and in an aesthetically appealing manner two or more different components. As can be appreciated, the handle portion has a general ergonomic shape and a series of patterns, even in relief, which are made possible by this known injection moulding technology for plastic material and which make it particularly appealing for the user.

In the specific case, the toothbrush is advantageously made of two co-moulded components, a first skeleton component of a more resistant material, such as polypropylene, and a second, softer filler component, such as an elastomeric material.

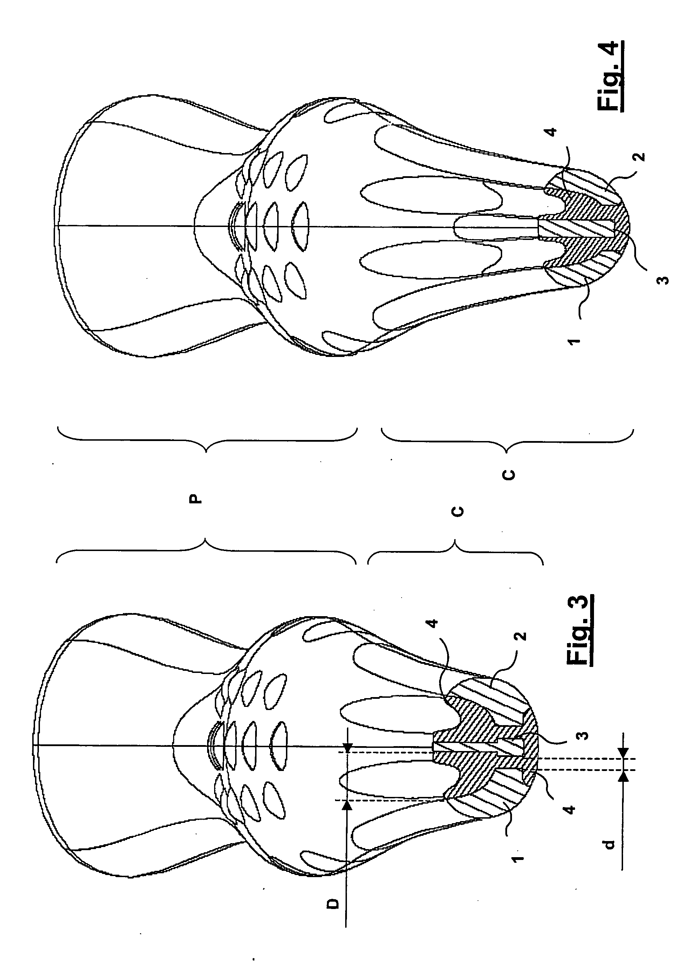

According to the invention, the neck portion C consists of two elongated side arms 1 and 2 between which a central core 3 lies, all these elements being moulded out of polypropylene or in any case skeleton plastic material. The filler material, as shown in figs. 3 and 4, is a softer material 4 such as elastomer.

Between the two side arms 1 and 2 and the central core 3 there is a gap sufficient to allow a wide movement of core 3 with respect to arms 1 and 2: this movement is elastically dampened and restrained by the presence of elastomeric material 4 in such gap.

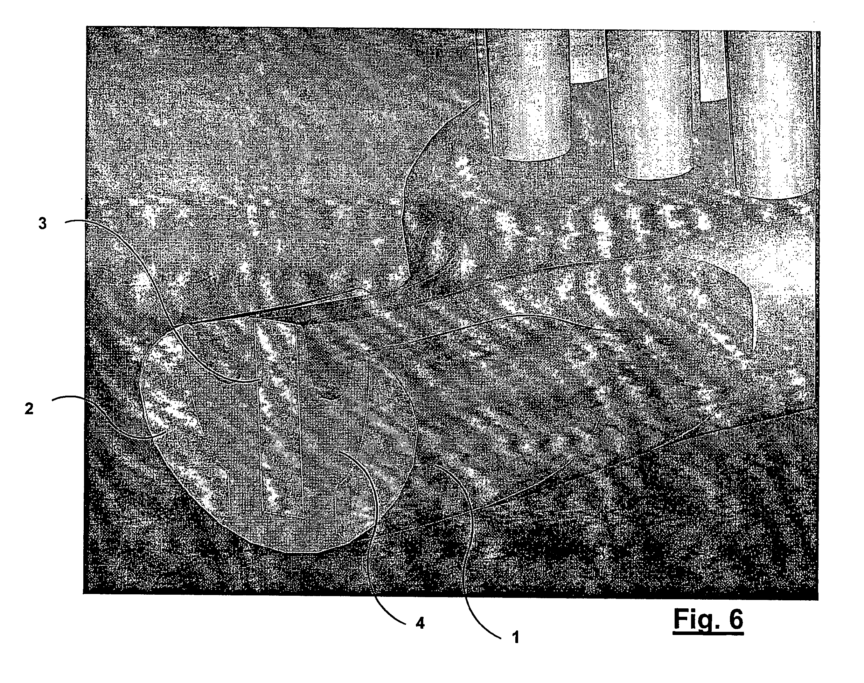

In the toothbrush illustrated in figs. 3, 4 and 6, the two side arms have a cross profile with a curved outline, more open towards the upper side of the toothbrush. Hence in the lower part (back side), the section profile of the arms comes closer to the base of central core 3 and the mutual distancing is smaller than in the upper part (ventral side).

Preferably, the distance between the central core and the two side arms is at least of 0.5 mm (for example in correspondence of the dimension d in fig. 3) and, for at least half the height of central core 3, it is over 1 mm.

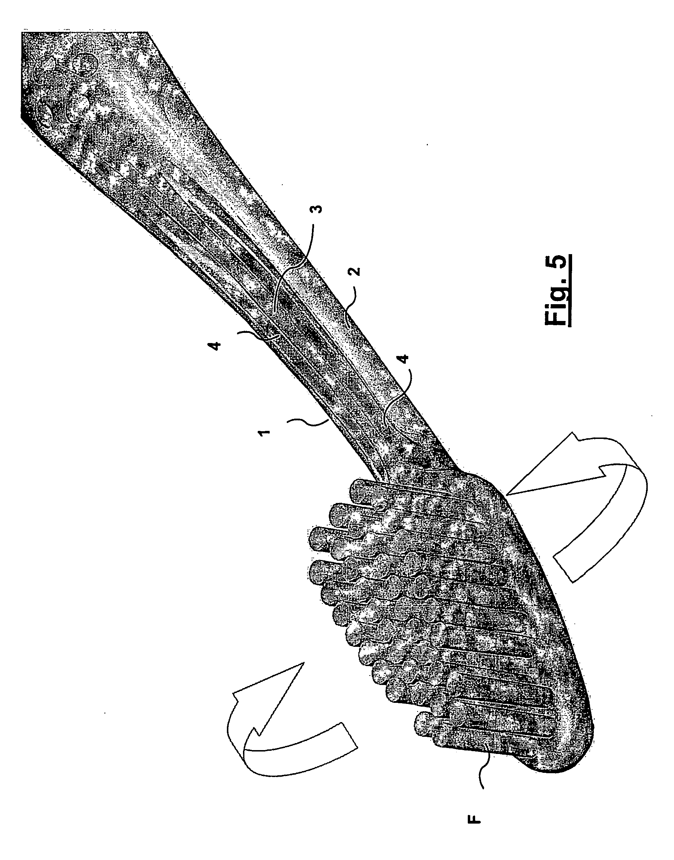

As visible in the cross-sections of figs. 3 and 4, the elastomeric filler material 4 fully closes the gap between the two arms 1 and 2 in the back side, joining the overall surface of the section along an even and continuous curved line with that of the side arms. On the contrary, in the ventral upper part, filler material 4 does not join evenly the surfaces of side arms 1 and 2 and of central core 3, but forms a sort of double meniscus which is symmetrical to central core 3, with a ventral concaveness which extends for a good portion of the neck portion forming two symmetrical recesses (clearly visible in fig. 5).

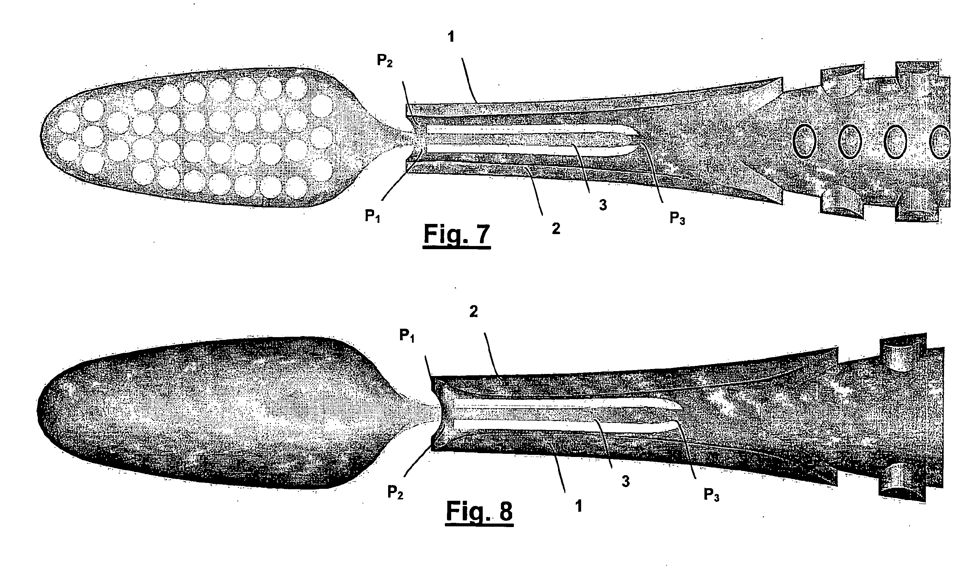

Moreover, according to the preferred embodiment shown, central core 3 extends integrally from the skeleton component of head T, and freely inserts cantilevered between the two arms 1 and 2 (see figs. 7-9); viceversa, the two arms 1 and 2 project integrally from the skeleton portion of the handle, extend along the two sides of core 3, and end cantilevered at a short distance from the head.

In order to consolidate the central core with the side arms
- especially before the second elastomeric component is moulded
- three flimsy connection bridges P₁-P₃ are also provided, made of the same plastic material as the skeleton, which connect the end of core 3 with the surrounding skeleton component and the ends of arms 1 and 2 with core 3.

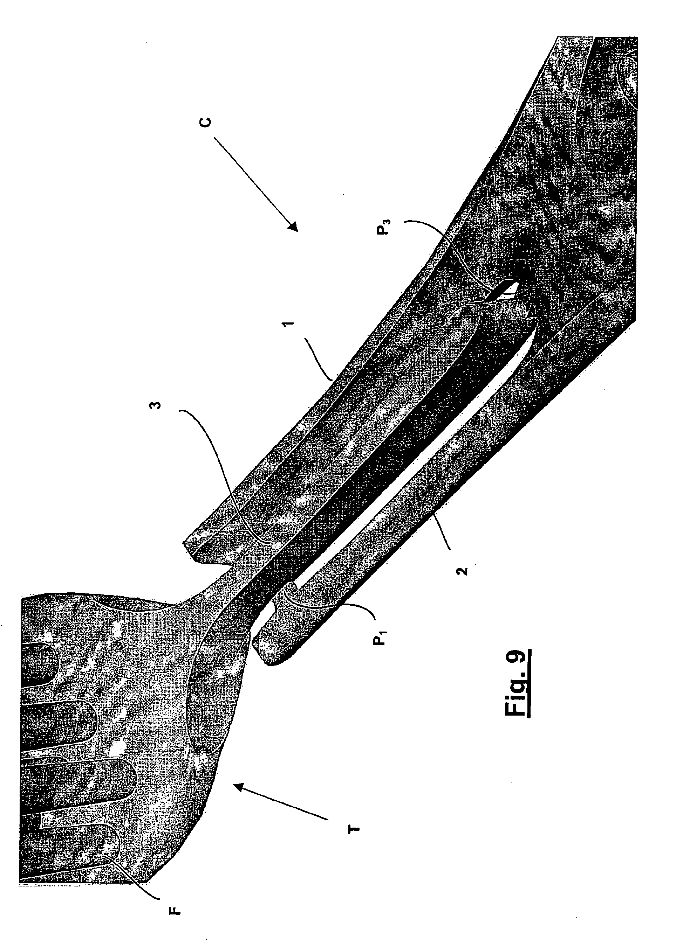

Seen from a different perspective, it can be appreciated that the two arms 1 and 2 depart from the handle forming a fork accommodating the central core 3, said core inserting freely into said fork: the bridges P₁-P₃ establish a flimsy connection between the fork and the central core. In order to nevertheless allow an adequate swinging of the core within the fork, bridges P₁-P₃, in addition to being flimsy and thin, join to the lower (back) part of core 3 (see fig. 9) where the torsion axis is substantially located, as will be highlighted further on.

The construction of this neck portion is clearly visible in fig. 9, wherein only the skeleton plastic component (for example polypropylene) is shown, which is moulded first and whereon the second elastomeric component is subsequently moulded.

Further, the core element (3) is shaped as an elongated, thin profile, with the main axis aligned with the direction of extension of said cleaning tufts (F).

This arrangement, together with the fact that central core 3 - as visible in the drawings - has a thin section in the direction of its width and hence a low inertia under torsion (despite a good inertia to flexion on the lateral plane of the toothbrush), produces the desired degree of elasticity under torsion of the head, as shown by the arrows of fig. 5.

The swinging under torsion of the head, under the pressure stress imparted during the cleaning of the dental arc, is elastically guided and dampened by the elastomeric material inserted between the two arms 1 and 2 and the core 3. At the same time the height of arms 1 and 2 and of core 3, as well as the overall width of neck portion C, nevertheless offer - as desired - a significant bending inertia along the two orthogonal axes crosswise to the longitudinal axis of the toothbrush, so as to keep within reasonable limits the yield of the head along these axes.

Hence the toothbrush according to the invention has a head which can easily swing under torsion along the longitudinal axis thereof, but has a conventional behaviour - not excessively yielding - along the two main bending axes, which fully meets the object set forth in the preliminary remarks.

In the preferred embodiment shown, the gap between the core and the side arms - wherein the elastomeric material 4 is found - is not constant across the entire height of core 3, as highlighted by the difference between distance d and distance D in fig. 3. Therefore, the elastic support of core 3 is advantageously differentiated across its height and hence the torsion axis does not fall on the centre of gravity of the core. In particular, since the cross section profile of the side arms (as visible in figs. 3 and 4) is arched and widens towards the upper part, the side yield of core 3 is greater in the upper part than in the lower part of the section: hence the rotation axis under torsion is shifted downwards (i.e. towards the back) with respect to the centre of gravity of the section area, even though it is still centred on the lateral symmetry axis.

This effect is heightened by the presence of bridges P₁-P₃ which, as seen, join the core in correspondence of the lower part thereof.

This results in the swinging under torsion of the head occurring about an axis shifted towards the back side of the toothbrush and of the head, hence in the proximity of the root of the tufts of bristles, which makes the elastic swinging of the head on the dental arc pleasant and effective.

Regardless of what is specifically disclosed and illustrated in the drawings as an example, the thickness and the nature of the elastomeric material filling the two gaps between the side arms and the central core may be chosen as desired, namely with a view towards adjusting as desired the elastic reaction of the head to torsion and the position of the rotation axis. As a result of the amount and of the location of the elastomeric material employed, the two ventral recesses may be even more pronounced, or they may be evident on the back side or even disappear completely.

Moreover, the elastomeric material in the two gaps may be different from the elastomeric material employed for the rest of the toothbrush and hence more or less soft to guarantee the swinging of the head regardless of the features of the rest of the toothbrush.

In the above the description, reference has been made to polypropylene as a skeleton component and to thermoplastic elastomeric material (TPE) as an elastic filler material, but it is intended that also other plastic materials may be used, provided the one (the skeleton component) has mainly an adequate structural resistance and the other (the filler component) is sufficiently elastic - at least compared to the skeleton component - to allow to obtain the desired elasticity under swinging. The same skeleton material of the head and of the handle may differ: in this case, the elastomeric material may be compatible with both materials, with one only of the two, or with neither of them (which would not allow a proper bonding between the materials, implying to obtain the mounting of the tool through suitable mechanical engagement devices).

Finally, a similar operation to the one shown is possible with an arrangement complementary to the described one, i.e. wherein the core element projects integrally from the handle and the two side arms are integral with the skeleton component of the head.

## Claims

1. Toothbrush comprising a body of plastic material made of at least a first skeleton component and at least a second filler component of elastomeric material, wherein a handle portion (P) and a head portion (T) can be identified, the latter being provided with cleaning tufts (F), between which a neck portion (C) is provided, wherein the neck portion (C) comprises two elongated side arms (1, 2) and a central core element (3), arranged between the two arms, which belong to said first skeleton component and which are substantially aligned with a longitudinal axis of the toothbrush, said second filler component (4) being arranged at least in the gaps between the two side arms (1, 2) and the central core (3),
said core (3) extending integrally from the skeleton component of head (T) and two arms (1, 2) projecting integrally from the skeleton portion of handle (P) or, complementary, the core element (3) projecting integrally from the handle and the two side arms (1, 2) being integral with the skeleton component of head (T), **characterized in that**
three flimsy connection bridges (P₁-P₃) being also provided, made of the same plastic material as the skeleton, which connect the end of the core (3) with the surrounding skeleton component and the ends of arms (1, 2) with core (3), said bridges (P₁ - P₃) joining the part of the core (3) where a torsion axis is located.

2. Toothbrush as claimed in claim 1), wherein the gaps between said arms (1, 2) and said central core element (3) progressively widen from the back side to the ventral side of the toothbrush.

3. Toothbrush as claimed in claim 1) or 2), wherein said side arms (1, 2) have an arched cross section which widens towards the ventral side of the toothbrush.

4. Toothbrush as claimed in any one of the preceding claims, wherein said core element (3) is shaped as an elongated, thin profile, with the main axis aligned with the direction of extension of said cleaning tufts (F).

5. Toothbrush as claimed in any one of the preceding claims, wherein said core element (3) projects integrally from the skeleton component of the head (T) of the toothbrush, inserting itself cantilevered between said two arms (1, 2), without becoming joined to the skeleton portion of the handle (P).

6. Toothbrush as claimed in any one of the preceding claims, wherein said side arms (1, 2) project integrally from the skeleton component of the handle (P), ending up cantilevered in the proximity of the skeleton portion of said head (T) without joining thereto.

7. Toothbrush as claimed in claim 5) or 6), wherein between said central core (3) and said arms (1, 2) there are provided connection bridges (P₁, P₂, P₃) of the same material as said skeleton component.

8. Toothbrush as claimed in claim 7), wherein said connection bridges (P₁, P₂, P₃) are thin and join to the lower (back side) portion of said core element (3).

9. Toothbrush as claimed in any one of the preceding claims, wherein said gaps are at least 0.5 mm wide.

10. Toothbrush as claimed in any one of the preceding claims, wherein said second filler component (4), in the ventral part of the gaps between the core element (3) and the two side arms (1, 2), is arranged as a concave meniscus.

## Patentansprüche

1. Zahnbürste umfassend einen Körper aus Kunststoff aus mindestens einer ersten Skelettkomponente und mindestens einer zweiten Füllkomponente aus einem Elastomer, wobei ein Griffbereich (P) und ein Kopfbereich (T) identifizierbar sind, wobei letzterer Reinigungsbüschel (F) aufweist, zwischen denen ein Halsbereich (C) angeordnet ist, wobei der Halsbereich (C) zwei längliche Seitenarme (1, 2) und ein zentrales Kernelement (3) aufweist, das zwischen den beiden Armen (1, 2) angeordnet ist, welche zu der ersten Skelettkomponente gehören und mit der Längsachse der Zahnbürste im Wesentlichen ausgerichtet sind, wobei die zweite Füllkomponente (4) zumindest in den Zwischenräumen zwischen den zwei Seitenarmen (1, 2) und dem zentralen Kern (3) angeordnet ist, und der Kern (3) sich integral von der Skelettkomponente des Kopfes (T) erstreckt und die zwei Seitenarme (1, 2) sich integral von einem Skelettbereich des Griffes (P) erstrecken, oder, komplementär sich der Kern (3) integral von dem Griff erstreckt und die zwei Seitenarme (1, 2) integral mit der Skelettkomponente des Kopfes (T) sind, **gekennzeichnet durch** drei dünne Verbindungsbrücken (P1 - P3) aus dem gleichen Kunststoff wie die Skelettkomponente, die das Ende des Kerns (3) mit der umgebenden Skelettkomponente sowie die Enden der Arme (1, 2) mit dem Kern (3) verbinden, wobei die Brücken (P1 - P3) an den Teil des Kerns (3), an dem sich eine Torsionsachse befindet, anschließen.

2. Zahnbürste nach Anspruch 1, wobei sich die Zwischenräume zwischen den Armen (1, 2) und dem zentralen Kernelement (3) progressiv von der Rückseite zu der Bauchseite der Zahnbürste aufweiten.

3. Zahnbürste nach Anspruch 1 oder 2, wobei die Seitenarme (1, 2) einen bogenförmigen Querschnitt aufweisen, der sich in Richtung der Bauchseite der Zahnbürste aufweitet.

4. Zahnbürste nach einem der vorangehenden Ansprüche, wobei das Kernelement (3) als längliches, dünnes Profil ausgebildet ist, wobei die Hauptachse in Richtung der Erstreckung der Reinigungsbüschel (F) ausgerichtet ist.

5. Zahnbürste nach einem der vorangehenden Ansprüche, wobei das Kernelement (3) integral von der Skelettkomponente des Kopfes (T) der Zahnbürste vorsteht und sich auskragend in den Zwischenraum zwischen den zwei Armen (1, 2) einfügt, ohne mit der Skelettkomponente des Griffes (P) verbunden zu werden.

6. Zahnbürste nach einem der vorangehenden Ansprüche, wobei die Seitenarme (1, 2) integral von der Skelettkomponente des Griffes (P) vorstehen und auskragend in der Nähe des Skelettbereiches des Kopfes (T) enden ohne an diesen anzuschließen.

7. Zahnbürste nach Anspruch 5 oder 6, wobei zwischen dem zentralen Kern (3) und den Armen (1, 2) Verbindungsbrücken (P1, P2, P3) aus demselben Material wie die Skelettkomponente angeordnet sind.

8. Zahnbürste nach Anspruch 7, wobei die Verbindungsbrücken (P1, P2, P3) dünn sind und mit dem unteren (rückseitigen) Bereich des Kernelements (3) verbunden sind.

9. Zahnbürste nach einem der vorangehenden Ansprüche, wobei die Zwischenräume mindestens 0,5 mm breit sind.

10. Zahnbürste nach einem der vorangehenden Ansprüche, wobei die zweite Füllkomponente (4) in dem Bauchbereich der Zwischenräume zwischen dem Kernelement (3) und den zwei Seitenarmen (1, 2) als konkave Wulst ausgebildet ist.

## Revendications

1. Brosse à dents comprenant un corps en matière plastique fait d'au moins un premier composant de squelette et d'au moins un second composant de remplissage en matière élastomère, où une partie de poignée (P) et une partie de tête (T) peuvent être identifiées, cette dernière étant dotée de loquets de nettoyage (F), entre lesquelles une partie de cou (C) est pourvue, où la partie de cou (C) comprend deux bras latéraux allongés (1, 2) et un élément de noyau central (3), agencé entre les deux bras, qui appartiennent audit premier composant de squelette et qui sont sensiblement alignés avec un axe longitudinal de la brosse à dents, ledit second composant de remplissage (4) étant agencé au moins dans les espaces entre les deux bras latéraux (1, 2) et le noyau central (3),
ledit noyau (3) s'étendant d'un seul tenant du composant de squelette de tête (T) et les deux bras (1, 2) faisant saillie d'un seul tenant de la partie de squelette de la poignée (P) ou, de façon complémentaire, l'élément de noyau (3) faisant saillie d'un seul tenant de la poignée et les deux bras latéraux (1, 2) étant d'un seul tenant avec le composant de squelette de la tête (T), **caractérisée en ce que**
trois ponts de liaison légers (P₁-P₃) étant également prévus, faits de la même matière plastique que le squelette, qui relient l'extrémité du noyau (3) avec le composant de squelette avoisinant et les extrémités des bras (1, 2) avec le noyau (3), lesdits ponts (P₁-P₃) reliant la partie du noyau (3) où un axe de torsion est situé.

2. Brosse à dents telle que revendiquée dans la revendication 1, dans laquelle les espaces entre lesdits bras (1, 2) et ledit élément de noyau central (3) s'élargissent progressivement du côté arrière au côté ventral de la brosse à dents.

3. Brosse à dents telle que revendiquée dans la revendication 1 ou 2, dans laquelle lesdits bras latéraux (1, 2) ont une coupe transversale cintrée qui s'élargit vers le côté ventral de la brosse à dents.

4. Brosse à dents telle que revendiquée dans l'une quelconque des revendications précédentes, dans laquelle ledit élément de noyau (3) est en forme de profil mince, allongé, avec l'axe principal aligné avec la direction d'extension desdits loquets de nettoyage (F).

5. Brosse à dents telle que revendiquée dans l'une quelconque des revendications précédentes, dans laquelle ledit élément de noyau (3) fait saillie d'un seul tenant du composant de squelette de la tête (T) de la brosse à dents, s'insérant lui-même en porte-à-faux entre lesdits deux bras (1, 2), sans être relié à la partie de squelette de la poignée (P).

6. Brosse à dents telle que revendiquée dans l'une quelconque des revendications précédentes, dans laquelle lesdits bras latéraux (1, 2) font saillie d'un seul tenant du composant de squelette de la poignée (P), finissant en porte-à-faux à proximité de la partie de squelette de ladite tête (T) sans être reliés à celle-ci.

7. Brosse à dents telle que revendiquée dans la revendication 5 ou 6, dans laquelle des ponts de liaison (P₁, P₂, P₃) de la même matière que ledit composant de squelette sont prévus entre ledit noyau central (3) et lesdits bras (1, 2).

8. Brosse à dents telle que revendiquée dans la revendication 7, dans laquelle lesdits ponts de liaison (P₁, P₂, P₃) sont minces et rejoignent la partie inférieure (côté arrière) dudit élément de noyau (3).

9. Brosse à dents telle que revendiquée dans l'une quelconque des revendications précédentes, dans laquelle lesdits espaces ont une largeur d'au moins 0,5 mm.

10. Brosse à dents telle que revendiquée dans l'une quelconque des revendications précédentes, dans laquelle ledit second composant de remplissage (4), dans la partie ventrale des espaces entre l'élément de noyau (3) et les deux bras latéraux (1, 2), est agencé comme un ménisque concave.
